# FASCICULE DE BREVET EUROPEEN

(11) **EP 0 791 991 B1**
(45) Date de publication et mention de la délivrance du brevet: **15.12.1999**
(21) Numéro de dépôt: 97400266.9
(22) Date de dépôt: 06.02.1997
(51) Int. Cl.: H02B 1/40, A47B 95/00

(54) **Dispositif de fixation d'une enveloppe logeant notamment des appareillages électriques**
Befestigung für ein Gehäuse, insbesondere zur Aufnahme elektrischer Geräte
Fastening device for a casing containing mainly electrical apparatus

(30) Priorité: 22.02.1996 FR 9602316
(43) Date de publication de la demande: 27.08.1997
(73) Titulaire: Schneider Electric Industries SA, 92100 Boulogne Billancourt (FR)
(72) Inventeur: Girard, Michel, 21910 Corcelles-Les-Citeaux (FR); Bassenonville, Denis, 21800 Chevigny (FR); Sibille,Didier, 21000 Dijon (FR)
(74) Mandataire: Saint Martin, René

(56) Documents cités:
- EP-A- 0 454 515
- DE-A- 1 901 685
- US-A- 3 681 663
- US-A- 4 632 594

## Description

La présente invention concerne un dispositif de fixation d'une enveloppe à une paroi, l'enveloppe étant notamment destinée à loger des appareillages électriques.

Des dispositifs de fixation connus dans l'art antérieur consistent en des pattes de fixation pliées en double équerre. Chaque patte de fixation présente deux branches parallèles qui sont chacune munies d'un orifice autorisant le passage d'une vis de manière à réaliser d'une part, l'assemblage de l'une des branches au fond de l'enveloppe, et d'autre part la fixation de l'autre branche à la paroi.

De tels dispositifs sont connus des documents DE-A-1 901 685 et US-A-3 681 663 par exemple.

Pour fixer les pattes au fond de l'enveloppe, il est nécessaire d'avoir accès à la face interne du fond de l'enveloppe, ce qui est souvent malaisé en raison de l'encombrement réalisé par les appareillages électriques. Ainsi, ces types de dispositifs de fixation ne permettent pas un montage ou un démontage rapide de l'enveloppe à la paroi.

L'invention a donc pour but de réaliser un dispositif de fixation aisé à mettre en oeuvre depuis l'extérieur de l'enveloppe, et n'utilisant pas de visserie pour l'assemblage du dispositif à l'enveloppe. Elle permet aussi d'obtenir un gain de temps pour le montage ou le démontage de l'enveloppe.

Le dispositif de fixation, comprenant un moyen de fixation murale, est caractérisé selon l'invention en ce qu'il est constitué par au moins une paire de griffes solidaires et en saillie de la face externe du fond de l'enveloppe, et par une pièce tournante de fixation munie du moyen de fixation murale et d'encoches coopérant avec la paire de griffes pour assurer le blocage en rotation de la pièce de fixation.

Le dispositif de fixation comprend de préférence deux paires de griffes disposées en croix de manière perpendiculaire selon deux axes respectifs qui sont parallèles à deux arêtes adjacentes du fond rectangulaire de l'enveloppe, les griffes de chaque paire étant disposées diamétralement opposées selon chaque axe.

La pièce de fixation présente une forme oblongue et plate et est avantageusement réversible perpendiculairement ou parallèlement à son axe médian longitudinal. Elle comprend au niveau de son axe de rotation un orifice dans lequel se loge un tourillon faisant saillie de la face externe du fond de l'enveloppe pour positionner la pièce sur le fond de l'enveloppe. Enfin, elle est maintenue sur les griffes grâce à chacune des branches de maintien axial des griffes s'appuyant sur l'une des faces de la pièce.

La description faite ci-après en regard des dessins fera ressortir les caractéristiques et avantages de l'invention. Aux dessins annexés:
- la figure 1 est une vue arrière d'une enveloppe munie de plusieurs dispositifs de fixation selon l'invention;
- la figure 2 est une vue de face d'un dispositif de fixation;
- la figure 3 est une vue en perspective du dispositif de fixation.

L'invention a pour objet un dispositif de fixation, repéré 20 sur les figures, permettant le montage d'une enveloppe 1, telle qu'un coffret de distribution électrique logeant des appareillages électriques, à une paroi ou à un panneau ou support quelconque.

L'enveloppe 1, réalisée en matériau métallique, est de forme parallélépipédique et comprend un fond 10 aux quatre coins duquel sont prévus les dispositifs respectifs de fixation 20.

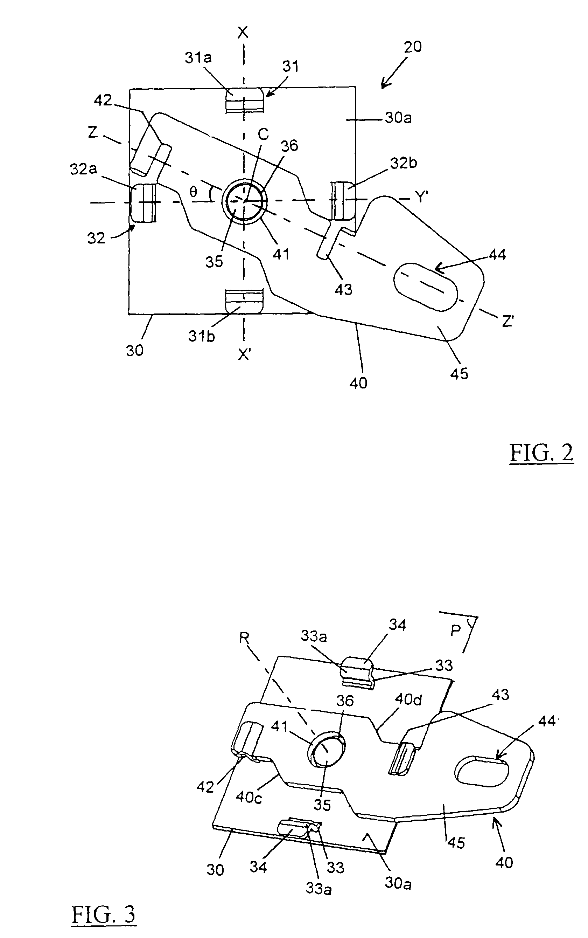

Chaque dispositif de fixation 20, tel que celui représenté à la figure 2, est constitué par une plaque fixe de support 30 en tôle, munie de deux paires 31 et 32 de griffes 31a, 31b et respectivement 32a, 32b, et par une pièce tournante de fixation 40 amovible, portée par la plaque fixe et apte à coopérer avec l'une des deux paires de griffes 31 ou 32. La pièce 40 réalise, après son verrouillage sur les griffes, la liaison mécanique entre l'enveloppe 1 et la paroi de fixation.

Les quatre griffes 31a, 31b, 32a et 32b sont en saillie par rapport à la face externe 30a de la plaque de support 30 de plan général P (figure 3). Elles sont réparties en croix à égale distance les unes des autres selon deux axes perpendiculaires XX' et YY', les griffes 31a et 31b étant diamétralement opposées selon l'axe XX' et les griffes 32a et 32b étant diamétralement opposées selon l'axe YY'.

Chaque griffe présente une forme sensiblement en équerre, ayant une branche inférieure 33 solidaire de la plaque 30 et s'étendant sensiblement perpendiculairement au plan P, et une branche supérieure 34 de largeur identique à la branche inférieure, solidaire de l'extrémité supérieure 33a de la branche inférieure et étant parallèle au plan P. La branche supérieure 34 peut être orientée vers, ou en variante à l'opposé, du centre C de la croix formée par les axes XX' et YY'. Comme on le verra par la suite, la branche 33 sert à bloquer en rotation la pièce 40 et la branche 34 sert à maintenir axialement cette même pièce.

La plaque de support 30 est dotée au centre C de la croix d'un tourillon 35 pour la pièce 40; ce tourillon est par exemple un repoussé de forme cylindrique faisant saillie de la face 30a de la plaque. Le repoussé est muni d'un rebord circulaire 36. Le tourillon 35 pourrait aussi être un ressaut en matière plastique rigide rapporté à la plaque.

La plaque fixe de support 30 est disposée sur le fond de l'enveloppe de façon que l'axe XX' et l'axe YY' soient parallèles à une arête latérale 12 et respectivement à l'arête supérieure 13 du fond 10 de l'enveloppe. La plaque 30 est solidarisée de la face externe 11 du fond 10 par tout mode de fixation, de préférence par soudage. Dans une variante de l'invention, les griffes pourraient être directement solidaires de la face externe 11 du fond de l'enveloppe sans qu'il soit besoin d'utiliser la plaque de support 30, en étant soit obtenues par crevé du fond, soit rapportées et fixées individuellement à celui-ci.

La pièce tournante de fixation 40 est de forme oblongue selon un axe médian longitudinal ZZ'. Elle présente deux faces plates opposées 40a et 40b et elle est réversible, de manière à présenter vers la paroi de fixation de l'enveloppe la face 40a ou la face 40b.

La pièce 40 est apte à coopérer avec une paire de griffes par pivotement autour d'un axe de rotation R perpendiculaire aux faces 40a et 40b et passant par le centre C de la croix.

A cet effet, la pièce 40 comprend au niveau de son axe de rotation R un trou 41 de forme cylindrique destiné à coopérer avec le rebord circulaire 36 du repoussé 35 de la plaque de support 30. Le diamètre du trou 41 n'est que légèrement supérieur au diamètre du rebord circulaire 36, de manière qu'après positionnement et emboîtement de la pièce sur le repoussé, le rebord assure une fonction de guidage et de tenue mécanique de la pièce tout en lui laissant une liberté de rotation autour de ce rebord.

Deux encoches 42 et 43 sont respectivement agencées dans l'épaisseur des deux tranches longitudinales 40c et 40d de la pièce et de manière symétrique par rapport à l'axe de rotation R. Elles présentent une forme rectiligne, ou incurvée en variante, et sont destinées à coopérer avec l'une des paires de griffes 31 ou 32.

Les encoches sont ainsi dirigées en sens opposé l'une de l'autre pour assurer une tenue mécanique entre la pièce et les griffes. Les dimensions des encoches sont adaptées à celles des griffes de manière à établir une friction lors de l'assemblage des encoches aux griffes pour assurer ensuite le blocage mécanique de la pièce 40.

Enfin, la pièce de fixation 40 comprend à l'une de ses extrémités 45, au-delà de l'encoche 43, un moyen de fixation murale 44 qui fait saillie latéralement au contour de l'enveloppe lorsque la pièce est en position de blocage. Le moyen de fixation 44 est constitué par un évidement qui autorise l'introduction d'une vis pour le montage du dispositif à la paroi. Dans une variante, le moyen de fixation 44 pourrait consister en un crochet de retenue ou tout autre élément de fixation analogue à la portée de l'homme de l'art.

La fixation de l'enveloppe à la paroi va maintenant être décrit:

On assemble tout d'abord les pièces de fixation 40 avec les paires de griffes 31 ou 32 solidarisées au fond de l'enveloppe.

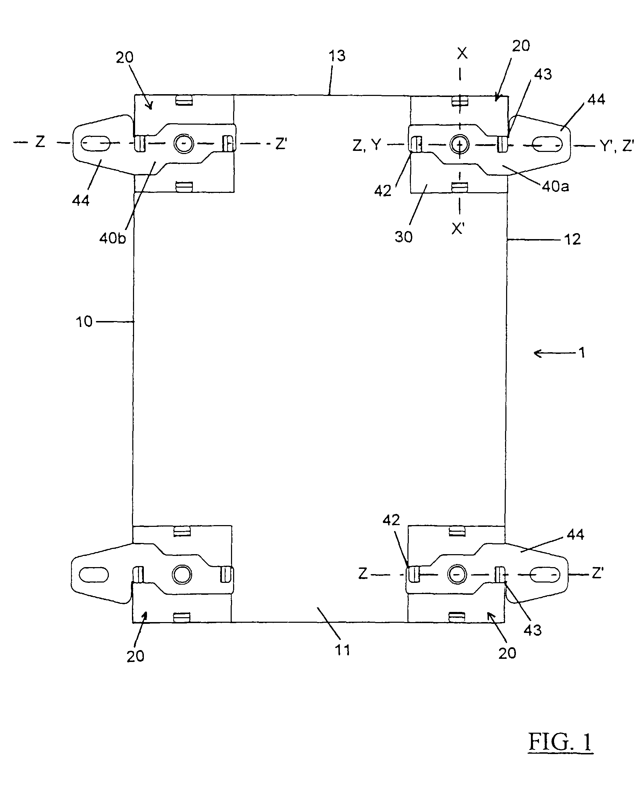

Les pièces de fixation 40 peuvent être positionnées horizontalement de façon que leur axe ZZ' soit parallèle à l'arête supérieure 13 du fond (figure 1), de sorte qu'elles subissent alors des efforts de flexion. Les pièces 40 peuvent aussi être positionnées verticalement de façon que leur axe ZZ' soit perpendiculaire à l'arête 13, de sorte qu'elles travaillent alors en traction et en compression. Le positionnement des pièces est choisi selon la possibilité d'aménagement de l'enveloppe contre la paroi.

Le verrouillage d'une pièce de fixation 40 sur les griffes se fait de la manière suivante:

On positionne la pièce 40 de manière que le trou 41 soit au dessus du repoussé 35, que le moyen de fixation 44 soit dirigé vers l'extérieur de l'enveloppe et que l'axe ZZ' fasse un angle θ avec l'axe YY' tel qu'illustré sur la figure 2. On engage le trou 41 de la pièce 40 autour du rebord circulaire 36 du repoussé 35 puis on fait pivoter la pièce autour de l'axe de rotation R de manière à engager les encoches 42 et 43 autour des branches inférieures 33 des griffes 32a et 32b pour une position de blocage horizontale de la pièce, ou des griffes 31a et 31b pour une position de blocage verticale de la pièce, les branches supérieures 34 s'appuyant sur l'une des faces de la pièce pour en empêcher l'extraction.

Comme la pièce est réversible, il suffit de la retourner perpendiculairement à son axe longitudinal ZZ', suivant le mode choisi de positionnement horizontal ou vertical de la pièce et le coin de l'enveloppe auquel elle est affectée. Ainsi, pour une position horizontale et dans le coin supérieur droit, comme illustré à la figure 1, la pièce 40 présente sa face 40a orientée vers l'extérieur de l'enveloppe et est verrouillée par rotation en sens antihoraire, tandis que pour une position horizontale et dans le coin supérieur gauche, la pièce 40 présente sa face 40b vers l'extérieur de l'enveloppe et est verrouillée par rotation en sens horaire.

Lorsque la pièce est en position horizontale dans les coins supérieurs, l'encoche 43, proche du moyen de fixation 44, doit présenter son extrémité ouverte vers le haut de façon que le verrouillage de la pièce 40 puisse ainsi être confirmé. Pour les coins inférieurs et en position horizontale, l'encoche 43 est de préférence disposée de manière que son extrémité ouverte soit orientée vers le bas de l'enveloppe afin d'éviter tout soulèvement de l'enveloppe. Il convient de noter que la réversibilité de la pièce permet une grande souplesse de montage.

Une fois les pièces 40 assemblées, on rapporte le fond 11 de l'enveloppe contre la paroi en appliquant les moyens de fixation 44 contre celle-ci pour une fixation par vissage.

## Revendications

1. Dispositif de fixation à une paroi d'une enveloppe logeant notamment des appareillages électriques, ce dispositif comprenant un moyen de fixation murale (44), caractérisé en ce qu'il est constitué par au moins une paire (31, 32) de griffes (31a, 31b; 32a, 32b) solidaires et en saillie de la face externe (11) du fond (10) de l'enveloppe, et par une pièce tournante de fixation (40) munie du moyen de fixation murale (44) et d'encoches (42, 43) coopérant avec la paire de griffes (31, 32) pour assurer le blocage en rotation de la pièce de fixation.

2. Dispositif de fixation selon la revendication 1, caractérisé en ce que la pièce de fixation (40) est réversible, et présente une forme oblongue et plate.

3. Dispositif de fixation selon la revendication 1 ou 2, caractérisé en ce que le dispositif de fixation (20) comprend deux paires de griffes (31, 32) disposées en croix de manière perpendiculaire selon deux axes respectifs (XX', YY') parallèles à deux arêtes adjacentes (12, 13) du fond de l'enveloppe, les griffes de chaque paire étant disposées diamétralement opposées selon chaque axe.

4. Dispositif de fixation selon l'une quelconque des revendications précédentes, caractérisé en ce que les griffes (31a, 31b, 32a, 32b) sont solidaires d'une plaque de support (30) solidarisée par soudage avec la face externe (11) du fond (10) de l'enveloppe.

5. Dispositif de fixation selon l'une quelconque des revendications précédentes, caractérisé en ce que la pièce de fixation (40) comprend au niveau de son axe de rotation (R) un orifice (41) dans lequel se loge un tourillon (35) faisant saillie de la face externe (11) du fond de l'enveloppe et en ce que les griffes (31, 32) présentent chacune une branche (34) de maintien axial de la pièce.

6. Dispositif de fixation selon la revendications 2, caractérisé en ce que la pièce (40) est réversible perpendiculairement ou parallèlement à son axe médian longitudinal (ZZ').

7. Dispositif de fixation selon l'une quelconque des revendications précédentes, caractérisé en ce que l'enveloppe a un fond rectangulaire et qu'un dispositif de fixation (20) est prévu à chaque coin du fond.

## Patentansprüche

1. Befestigungsvorrichtung an einer Wand eines Gehäuses insbesondere zur Aufnahme von elektrischen Geräten, wobei diese Vorrichtung ein Wandbefestigungsmittel (44) umfasst, dadurch gekennzeichnet, dass sie aus mindestens einem Paar (31, 32) Klauen (31a, 31b ; 32a, 32b) besteht, die an der Aussenseite (11) des Bodens (10) des Gehäuses befestigt sind und aus ihr herausragen, und aus einem drehbaren Befestigungsteil (40) mit dem Wandbefestigungsmittel (44) und mit Kerben (42, 43), die mit dem Klauenpaar (31, 32) zusammenwirken, um die Rotation des Befestigungsteiles zu blockieren.

2. Befestigungsvorrichtung nach Anspruch 1, dadurch gekennzeichnet, dass das Befestigungsteil (40) umkehrbar ist und eine längliche und flache Form aufweist.

3. Befestigungsvorrichtung nach Anspruch 1 oder 2, dadurch gekennzeichnet, dass die Befestigungsvorrichtung (20) zwei kreuzweise angeordnete Klauenpaare (31, 32) aufweist, lotrecht nach zwei jeweiligen Achsen (XX', YY'), die parallel zu zwei angrenzenden Kanten (12, 13) des Gehäusebodens verlaufen, wobei die Klauen eines jeden Paares nach jeder Ache gegengleich angeordnet sind.

4. Befestigungsvorrichtung nach einem der vorstehend genannten Ansprüche, dadurch gekennzeichnet, dass die Klauen (31a, 31b, 32a, 32b) auf einer Tragplatte (30) befestigt sind, die an der Aussenseite (11) des Bodens (10) des Gehäuses angeschweisst ist.

5. Befestigungsvorrichtung nach einem der vorstehend genannten Ansprüche, dadurch gekennzeichnet, dass das Befestigungsteil (40) an seiner Rotationsachse (R) eine Öffnung (41) aufweist, in die ein aus der Aussenseite (11) des Gehäusebodens herausragender Zapfen (35) eingreift, und dass die Klauen (31, 32) jeweils einen axialen Haltezweig (34) des Teiles aufweisen.

6. Befestigungsvorrichtung nach Anspruch 2, dadurch gekennzeichnet, dass das Teil (40) lotrecht oder parallel zu seiner mittleren Längsachse (ZZ') umkehrbar ist.

7. Befestigungsvorrichtung nach einem der vorstehend genannten Ansprüche, dadurch gekennzeichnet, dass das Gehäuse einen rechteckigen Boden aufweist, und dass an jeder Ecke des Bodens eine Befestigungsvorrichtung (20) vorgesehen ist.

## Claims

1. Device for fastening a housing to a surface, said housing being particularly intended for electrical apparatuses, said device comprising mural fastening means (44), characterized in that it consists of at least one pair (31, 32) of claws (31a, 31b; 32a, 32b) that are constructed as part of and project from the outer surface (11) of the base (10) of the housing, and of a rotating fastening component (40) fitted with mural fastening means (44) and notches (42, 43) that operate in conjunction with the pair of claws (31, 32) to prevent the fastening component from rotating.

2. Fastening device of claim 1 characterized in that the fastening component (40) is reversible and is flat and oblong in shape.

3. Fastening device of claims 1 or 2 characterized in that the fastening component (20) comprises two pairs of claws (31, 32) perpendicularly disposed crosswise in two respective axes (XX', YY') that are parallel to two adjacent edges (12, 13) of the base of the housing, the claws of each pair being disposed diametrically opposite one another in each axis.

4. Fastening device of any of the foregoing claims characterized in that the claws (31a, 31b, 32a, 32b) are constructed as part of a support plate (30) welded onto the outer surface (11) of the bottom (10) of the housing.

5. Fastening device of any of the foregoing claims characterized in that the axis of rotation R of the fastening component (40) is fitted with an aperture (41) that houses a shaft (35) that projects from the outer surface (11) of the base of the housing, and in that the claws (31, 32) each have an arm (34) for axially retaining the component.

6. Fastening device of claim 2 characterized in that the component (40) can be reversed perpendicularly or parallel to its longitudinal median axis (ZZ').

7. Fastening device of any of the foregoing claims characterized in that the housing has a rectangular base and has a fastening device (20) at each corner of said base.
